# EUROPÄISCHE PATENTSCHRIFT

(11) **EP 3 807 694 B1**
(45) Veröffentlichungstag und Bekanntmachung des Hinweises auf die Patenterteilung: **06.08.2025**
(21) Anmeldenummer: 19729768.2
(22) Anmeldetag: 13.06.2019
(51) Int. Cl.: G02B 27/00, G02B 27/01, G02B 27/62

(54) **HEAD-UP-DISPLAY MIT EXAKT AUSGERICHTETEN LICHTWELLENLEITERN**
HEAD-UP DISPLAY WITH EXACTLY ALIGNED OPTICAL WAVEGUIDES
AFFICHEUR TÊTE HAUTE À GUIDES D'ONDES DE LUMIÈRE À ORIENTATION EXACTE

(30) Priorität: 15.06.2018 EP 18465536
(43) Veröffentlichungstag der Anmeldung: 21.04.2021
(73) Patentinhaber: Continental Automotive Technologies GmbH, 30175 Hannover (DE)
(72) Erfinder: KOLLOCH, Ulrich, 65824 Schwalbach a. Ts. (DE); SCHEFFLER-JUSCHTSCHENKO, Willi, 65824 Schwalbach a. Ts. (DE); WILLE, Felicitas, 65824 Schwalbach a. Ts. (DE); MARKUS, Ferenc, 60488 Frankfurt am Main (DE)
(74) Vertreter: Aumovio Corporation
(86) Internationale Anmeldenummer: PCT/EP2019/065535
(87) Internationale Veröffentlichungsnummer: WO 2019/238840

(56) Entgegenhaltungen:
- EP-A1- 3 226 063
- US-A1- 2006 291 771
- US-A1- 2014 140 653
- US-A1- 2017 299 860

## Beschreibung

Die vorliegende Erfindung betrifft ein Head-Up-Display mit exakt ausgerichteten Lichtwellenleiter sowie ein Verfahren zum exakten Ausrichten.

Aus der US 2016/0124223 A1 ist ein Head-Up-Display mit einem Lichtwellenleiter bekannt. Soll damit ein farbiges virtuelles Bild erzeugt werden, sind zumindest zwei Lichtwellenleiter für unterschiedliche Farben erforderlich. Diese sollten möglichst exakt zueinander ausgerichtet sein, um einen guten Farbeindruck sicherzustellen.

Aus der EP 3 226 063 A1 ist ein Head-Mounted-Display mit einem Bildgenerator und einer optischen Einheit bekannt. Die optische Einheit kann mehrere Lichtwellenleiter mit Hologrammen umfassen. Die Lichtwellenleiter werden in einem Justageschritt zueinander ausgereichtet. Zu diesem Zweck sind in den Lichtwellenleitern Markierungen vorgesehen, die beleuchtet werden. Das beim Beleuchten aus den Lichtwellenleitern ausgekoppelte Licht wird mit Kameras detektiert und für die Justage genutzt.

Das Dokument ist hochgradig relevant für die vorliegende Erfindung. Nicht offenbart ist, dass das Licht, das eine erste Markierung durchläuft, anschließend eine zweite Markierung durchläuft, und dass das daraus resultierende Muster ausgewertet wird.

Aus der US 2017/0299860 A1 ist eine Wellenleiter-basierte Anzeigevorrichtung. Die Anzeigevorrichtung umfasst eine Projektoreinheit, die einen Beam-Scanner verwendet, einen Lichtwellenleiter und einen Austrittspupillen-Expander, der optisch zwischen der Projektoreinheit und dem Lichtwellenleiter gekoppelt ist. Der Lichtwellenleiter kann mehrere Lichtwellenleiter umfassen, die zueinander ausgerichtet sind.

Bei einem Verfahren zum exakten Ausrichten zueinander von zumindest zwei in Lichtwellenleitern angeordneter Hologramme gemäß der Erfindung erfolgt zumindest folgendes: Schreiben eines ersten Hologramms und einer ersten Markierung in einen ersten Lichtwellenleiter. Schreiben eines zweiten Hologramms und einer zweiten Markierung in einen zweiten Lichtwellenleiter. Positionieren des ersten Lichtwellenleiters und des zweiten Lichtwellenleiters zueinander. Beleuchten der ersten Markierung und der zweiten Markierung mit einem Lichtstrahl, der nacheinander zueinander gehörige Markierungen des ersten Lichtwellenleiters und des zweiten Lichtwellenleiters passiert und jeweils von den zueinander gehörigen Markierungen beeinflusst wird, wobei die Markierungen der einzelnen Lichtwellenleiter Gitterstrukturen oder Hologramme sind, die das beim Beleuchten verwendete Licht beeinflussen und so aufeinander abgestimmt sind, daß eine korrekte Ausrichtung detektierbar ist, und wobei die Markierungen eine Linsenfunktion aufweisen, deren zugehörige Brennweiten so gewählt sind, daß beim Beleuchten ein korrektes Muster nur dann auftritt, wenn auch der Abstand der einzelnen Lichtwellenleiter zueinander einen vorgegebenen Wert annimmt. Detektieren eines beim Beleuchten mit dem Lichtstrahl nach dem Passieren der ersten Markierung und der zweiten Markierung auftretenden Musters. Verändern der Position eines der Lichtwellenleiter solange, bis das detektierte Muster mit einem vorgegebenen Muster übereinstimmt.

Erfindungsgemäß weisen die Markierungen eine Linsenfunktion auf. Dabei sind die Brennweiten so gewählt, daß ein korrektes Muster nur dann auftritt, wenn auch der Abstand der einzelnen Lichtwellenleiter zueinander einen vorgegebenen Wert annimmt. Ein exaktes Positionieren ist somit nicht nur zweidimensional in der Ebene, sondern auch in der dritten Dimension ermöglicht.

Vorteilhafterweise erfolgt das Schreiben zumindest einer der Markierungen in dasselbe Material, in das auch das zugehörige Hologramm geschrieben wird. Dies erfolgt vorzugsweise indem das Hologramm und die Markierung gleichzeitig belichtet und fixiert wird. Gemäß einer Variante werden Hologramm und Markierung aufeinanderfolgend belichtet. Die Markierung wird beispielsweise durch Einbrennen mittels großem Energieeintrag erzeugt.

Gemäß einer Variante erfolgt das Schreiben zumindest einer der Markierungen in ein anderes Material als demjenigen, in das das zugehörige Hologramm geschrieben wird. Vorteilhafterweise wird die Markierung als lichtundurchlässiges Material neben dem Hologramm in dessen Ebene oder auf die Schicht, in dem sich das Hologramm befindet aufgebracht.

Vorteilhafterweise liegen die Markierungen der einzelnen Lichtwellenleiter bei korrekter Positionierung exakt übereinander und ergeben beim Beleuchten ein detektierbares Muster.

Gemäß einer Variante liegen die Markierungen der einzelnen Lichtwellenleiter bei korrekter Positionierung nebeneinander und ergeben beim Beleuchten ein detektierbares Muster. In diesem Muster liegen von den unterschiedlichen Markierungen herrührenden Anteile vorzugsweise getrennt nebeneinander, und können so getrennt detektiert werden.

Vorzugsweise läßt ein zentraler Bereich der Markierung Licht passieren, während ein außerhalb des zentralen Bereichs befindlicher äußerer Bereich Licht stark nach außen ablenkt. Das detektierte Muster ist somit nur dann hell, wenn die zentralen Bereiche aller übereinanderliegender Markierungen vom Lichtstrahl getroffen werden, also eine exakte Positionierung erreicht ist.

Vorteilhafterweise werden unterschiedliche Markierungen an unterschiedlichen Positionen der Lichtwellenleiter angeordnet. Dies hat den Vorteil, daß durch eine Kombination unterschiedlicher auszuwertender Muster ein noch exakteres Positionieren ermöglicht wird.

Erfindungsgemäß wird ein Stapel von Lichtwellenleitern mittels einem erfindungsgemäßen Verfahren hergestellt.

Ein erfindungsgemäßes Head-Up-Display weist einen solchen Stapel von Lichtwellenleitern auf.

Weitere Varianten und deren Vorteile sind auch der nachfolgenden Beschreibung von Ausführungsbeispielen entnehmbar.

### Figurenübersicht:

- Fig.1: Head-Up-Display gemäß Stand der Technik
- Fig.2: schematischer Strahlengang
- Fig.3: schematischer Strahlengang mit Diffusor
- Fig.4: Strahlengang mit gerichtetem Diffusor
- Fig.5: Strahlengang mit mehreren Bildgebern
- Fig.6: Strahlengang mit Bild im Unendlichen
- Fig.7: Strahlengang mit virtueller Verdopplung
- Fig.8: Strahlengang mit Lichtwellenleiter
- Fig.9: Strahlengang mit Lichtwellenleiter
- Fig.10: Head-Up-Display mit Lichtwellenleiter
- Fig.11: Lichtwellenleiter mit zweidimensionaler Vergrößerung
- Fig.12: Head-Up-Display mit Lichtwellenleiter
- Fig.13: Lichtwellenleiter im Längsschnitt
- Fig.14: Stapel von Lichtwellenleitern und dessen Herstellung
- Fig.15: Ablaufdiagramm eines erfindungsgemäßen Verfahrens.

### Figurenbeschreibung

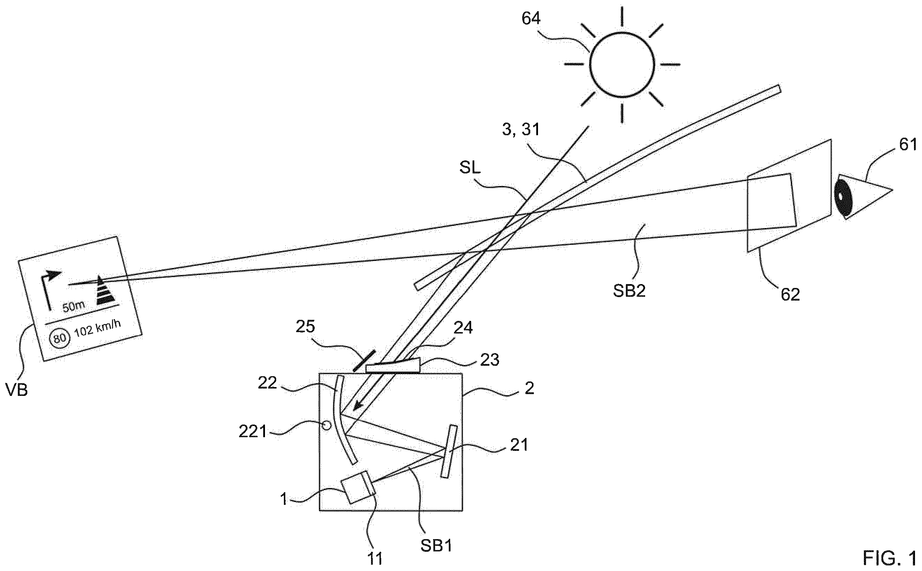

Fig.1 zeigt eine Prinzipskizze eines Head-Up-Displays gemäß Stand der Technik. Es weist einen Bildgenerator 1 auf, eine Optikeinheit 2 und eine Spiegeleinheit 3. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3, die hier als Windschutzscheibe 31 eines Fahrzeugs dargestellt ist, reflektiert. Von dort gelangt das Strahlenbündel SB2 Richtung Auge 61 eines Betrachters. Dieser sieht ein virtuelles Bild VB, welches sich außerhalb des Fahrzeugs oberhalb der Motorhaube oder sogar vor dem Fahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 dient zum einen dazu, den Strahlengang aufzubereiten und somit für ein größeres Bild und eine größere Eyebox 62 zu sorgen. Zum anderen gleicht die Krümmung eine Krümmung der Windschutzscheibe 31 aus, sodaß das virtuelle Bild VB einer vergrößerten Wiedergabe des vom Anzeigeelement 11 dargestellten Bildes entspricht. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, daß der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24, die einfallendes Sonnenlicht SL daran hindern soll, über die Spiegel 21,22 auf das Anzeigeelement 11 zu gelangen. Dieses kann durch dabei auftretende Wärmeentwicklung vorübergehend oder auch dauerhaft geschädigt werden. Um dies zu verhindern wird beispielsweise ein Infrarotanteil des Sonnenlichts SL mittels der optischen Folie 24 ausgefiltert. Ein Blendschutz 25 dient dazu, von vorne einfallendes Licht abzuschatten, sodaß es nicht von der Abdeckung 23 Richtung Windschutzscheibe 31 reflektiert wird, was eine Blendung des Betrachters hervorrufen würde. Außer dem Sonnenlicht SL kann auch das Licht einer anderen Störlichtquelle 64 auf das Anzeigeelement 11 gelangen.

Gleiche Bezugszeichen werden auch in den folgenden Figuren für gleiche oder gleichwirkende Elemente verwendet, und nicht notwendigerweise zu jeder Figur erneut beschrieben.

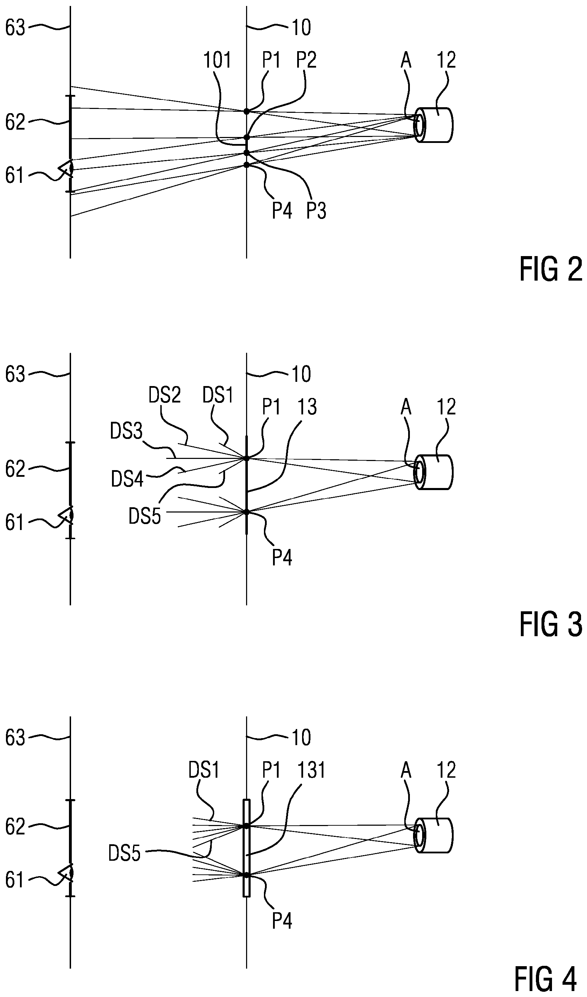

Die Fig. 2-4 zeigen einen vereinfachten schematischen Strahlengang in einem Head-Up-Display. Dabei sind die unterschiedlichen Spiegelungen der Übersichtlichkeit halber weggelassen. Man sieht links das Auge 61, in der Mitte die Bildebene 10, die sowohl dem Anzeigeelement 11 als auch dem virtuellen Bild VB entspricht, und rechts die Apertur A eines Bildgebers 12, der beispielsweise ein Spatial Light Modulator, auch SLM genannt, ist. Mit einem SLM wird Licht räumlich moduliert. Dies kann auf unterschiedliche Arten erfolgen. Eine spezielle Art SLM ist ein DMD-Projektor, wobei DMD für "Digital Micromirror Device" steht. Dies ist ein Gerät, bei dem entweder ein einzelner in X- und Y-Richtung beweglicher Mikrospiegel einen Laserstrahl über eine Bildfläche scannt, oder bei dem die Bildfläche durch eine Vielzahl flächig nebeneinander angeordneter Mikrospiegel gebildet ist, die von einer Lichtquelle beleuchtet werden. Die Eyebox 62 ist in der Betrachtungsebene 63 mittels einer verstärkten Linie und Begrenzung nach oben und unten kenntlich gemacht.

Fig.2 zeigt Punkte P1 bis P4 in der Bildebene 10. Man erkennt, daß der Punkt P1 aufgrund seiner Lage in der Bildebene 10 und der Größe der Apertur A nur aus Teilen der Eyebox 62 sichtbar ist. Der Punkt P4 ist nur außerhalb der Eyebox 62 sichtbar. Nur die Punkte P2 und P3 sind in der Eyebox 62 sichtbar, von ihnen ausgehende Strahlen fallen auch ins Auge 61. Somit kann nur ein kleiner Bereich 101 der Bildebene 10 vom Auge 61 in dessen dargestellte Position erfaßt werden.

Fig.3 zeigt die gleiche Anordnung wie Fig.2, allerdings mit einem in der Bildebene 10 angeordneten Diffusor 13. Dieser sorgt dafür, daß vom Bildgeber 12 her kommendes Licht diffus gestreut wird. Dies ist in den Punkten P1 und P4 mittels diffus gestreuter Strahlen DS1 - DS5 angedeutet, deren Richtung angibt, in welche Richtung diffus gestreuter wird, und deren Länge die Intensität in die entsprechende Richtung angibt. Man erkennt, daß die größte Intensität im Zentrum des entsprechenden in Fig.2 gezeigten Strahlenbündels verläuft, hier durch den diffus gestreuten Strahl DS3 verdeutlicht. Je größer der Winkel der anderen Strahlen DS1, DS2, DS4, DS5 zu dem Strahl DS3 ist, desto geringer ist ihre Intensität. Man erkennt, daß vom Punkt P1 der Strahl DS5 ins Auge 61 gelang. In die Eyebox 62 fallen weiterhin die diffus gestreuten Strahlen DS3 und DS4, während die Strahlen DS1 und DS2 außerhalb liegen, und somit verlorengehen. Ähnliches gilt für Punkt P4.

Fig.4 zeigt die gleiche Anordnung wie Fig.3, allerdings mit einem Diffusor 131, der eine spezielle Diffusionscharakteristik aufweist. Man erkennt, daß alle vom Punkt P1 ausgehenden diffus gestreuten Strahlen DS1 bis DS5 in etwa gleiche Intensität aufweisen, und ihre Winkelverteilung so ist, daß sie alle in die Eyebox 62 gelangen. Ein Lichtverlust tritt somit an dieser Stelle nicht auf.

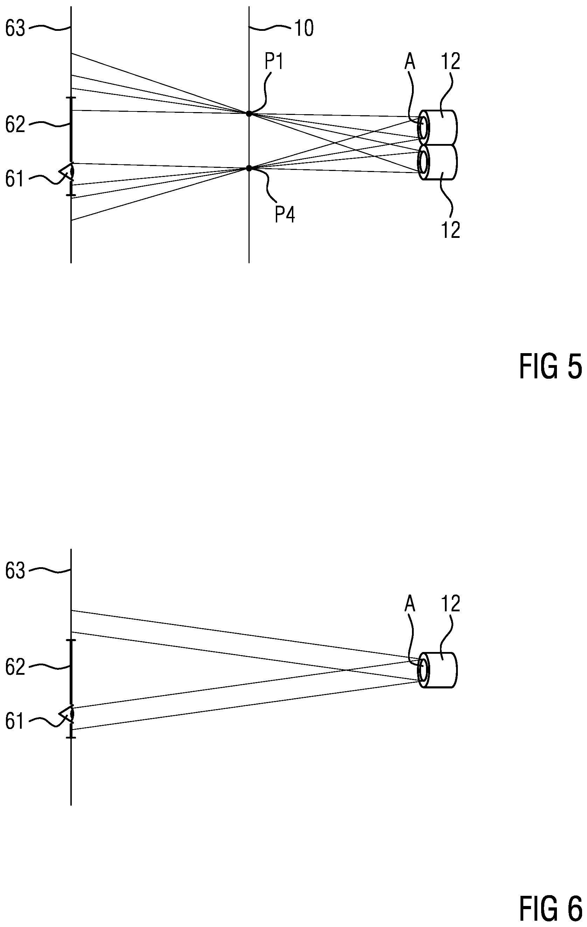

Fig.5 zeigt eine ähnliche Anordnung wie die vorhergehenden Figuren, hier allerdings mit mehreren Bildgebern 12. Die Bildgeber 12 sind so aufeinander abgestimmt, daß in den Punkten P1 und P4 Lichtstrahlen in einem größeren Winkelbereich abgestrahlt werden, wodurch auch der Punkt P4 aus der Eyebox 62 heraus sichtbar ist. Durch eine Vergrößerung der Anzahl der Bildgeber 12 wird ein ähnlicher Effekt wie mittels eines Diffusors 13 bezüglich der Sichtbarkeit der Punkte P1 bis P4 in der gesamten Eyebox 62 erzielt.

Fig.6 zeigt eine ähnliche Anordnung wie die vorhergehenden Figuren, hier fokussiert der Bildgeber 12 aber nicht auf eine Bildebene, sondern kollimiert ins unendliche. Die in der Betrachtungsebene 63 zu einem Punkt ankommenden Strahlen verlaufen jeweils parallel zueinander. Dies ermöglicht es, anstatt mehrere aufeinander abgestimmte Bildgeber 12 anzuordnen, wie in Fig.5 gezeigt, den einen Bildgeber 12 virtuell zu verdoppeln. Dies ist in den folgenden Figuren gezeigt.

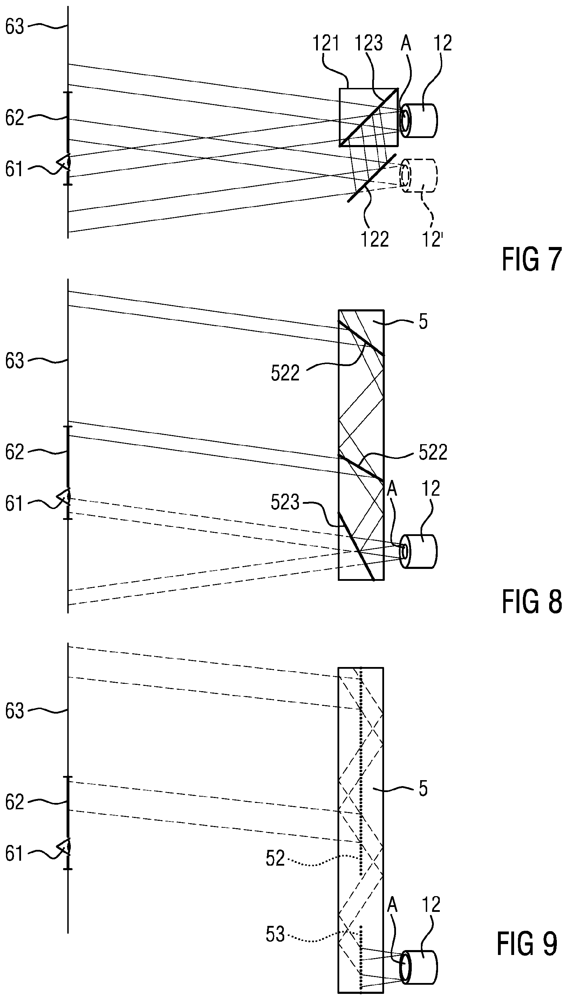

Fig.7 zeigt eine ähnliche Anordnung wie Fig.6, hier allerdings mit virtueller Verdopplung des Bildgebers 12. Dazu ist ein Strahlteiler im Strahlengang des Bildgebers 12 angeordnet, der einen Teil der Strahlung auf einen Spiegel 122 reflektiert. Die Spiegelebene 123 des Strahlteilers 121 ist parallel zum Spiegel 122 ausgerichtet. Die Anzahl der vom Bildgeber 12 ausgehenden parallelen Strahlenbündel, von denen hier zwei gezeigt sind, wird verdoppelt, ihre Intensität jeweils halbiert. Somit treffen beide dargestellten Strahlenbündel in die Eyebox 62. Der virtuelle Bildgeber 12'ist gestrichelt angedeutet. Durch geeignete Anordnung von weiteren Strahlteilern und geeigneter Anpassung von deren Größe läßt sich erreichen, daß Strahlenbündel zu einem großen Winkelbereich von jedem Punkt der Eyebox 62 aus betrachtet werden können, wenn sich das Auge 61 dort befindet.

Fig.8 zeigt eine ähnliche Anordnung wie Fig.7. Allerdings sind hier der Strahlteiler 121 und der Spiegel 122 durch einen Lichtwellenleiter 5 ersetzt. Der Lichtwellenleiter 5 weist eine Spiegelebene 523 auf, mit der vom Bildgeber 12 kommendes Licht in den Lichtwellenleiter 5 eingekoppelt wird. Die Verlängerung der ursprünglichen Strahlrichtung ist gestrichelt angedeutet. Das in dem Lichtwellenleiter 5 eingekoppelte Licht wird an dessen Grenzflächen totalreflektiert und wird somit innerhalb des Lichtwellenleiters 5 geleitet. Der Lichtwellenleiter 5 weist weiterhin Spiegelebenen 522 auf, die teildurchlässig sind und jeweils einen Teil des auf sie auftreffenden Lichts aus dem Lichtwellenleiter 5 auskoppeln. Dies ist der Übersichtlichkeit halber mit dem parallelen Strahlenbündel zu nur einem Winkel gezeigt. Man erkennt das Prinzip der Vervielfachung der parallelen Strahlenbündel. Durch geeignete Anordnung läßt sich eine hinreichend gleichmäßige Ausleuchtung der Eyebox 62 erzielen. Das Einkoppeln und das Auskoppeln können anstatt mittels Spiegelebenen 522,523 auch mittels an der Oberfläche des Lichtwellenleiters 5 angeordneter Beugungsgitter (hier nicht dargestellt) oder auf andere, dem Fachmann geläufige Art und Weise, erfolgen.

Fig.9 zeigt eine ähnliche Anordnung wie Fig.8, allerdings weist hier der Lichtwellenleiter 5 ein Einkoppelhologramm 53 und ein Auskoppelhologramm 52 auf, die als Volumenhologramme in der Mitte des Lichtwellenleiters 5 angeordnet sind. Auch hier wird nur das Prinzip angedeutet. Es versteht sich, daß durch geeignete Wahl der Hologramme erreicht werden kann, daß die gesamte Eyebox 62 gleichmäßig mit parallelen Strahlenbündeln zu allen gewünschten Winkeln ausgeleuchtet wird.

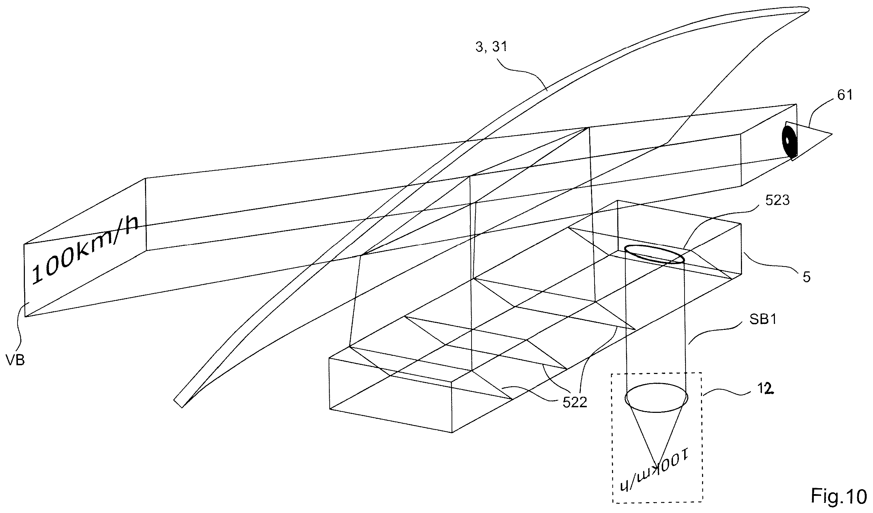

Fig.10 zeigt ein Head-Up-Display ähnlich zu Fig.1, hier allerdings in räumlicher Darstellung und mit einem Lichtwellenleiter 5. Man erkennt den schematisch angedeuteten Bildgeber 12, der ein paralleles Strahlenbündel SB1 erzeugt, welches mittels der Spiegelebene 523 in den Lichtwellenleiter 5 eingekoppelt wird. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert, welches ein virtuelles Bild VB über der Motorhaube bzw. in noch weiterer Entfernung vor dem Fahrzeug sieht.

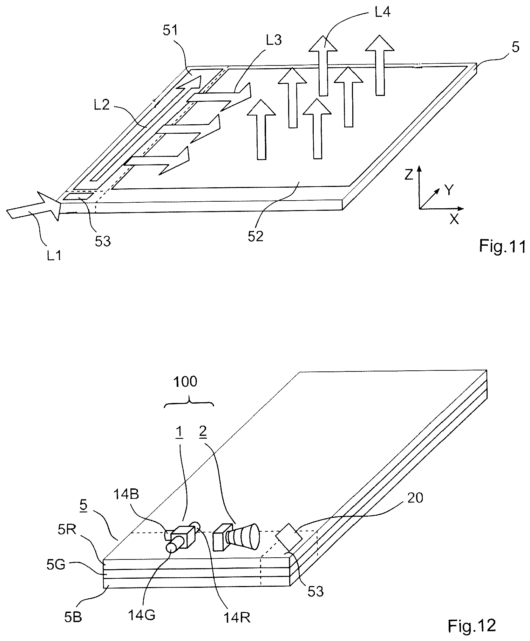

Fig.11 zeigt in schematischer räumlicher Darstellung einen Lichtwellenleiter 5 mit zweidimensionaler Vergrößerung. Im unteren linken Bereich erkennt man ein Einkoppelhologramm 53 mittels dessen von einem nicht dargestellten Bildgeber 12 kommendes Licht L1 in den Lichtwellenleiter 5 eingekoppelt wird. In diesem breitet es sich in der Zeichnung nach rechts oben aus, entsprechend dem Pfeil L2. In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X Richtung, sodaß das ursprüngliche einfallende Lichtbündel L1 als in zwei Dimensionen vergrößertes Lichtbündel L4 den Lichtwellenleiter 5 verläßt. Der Lichtwellenleiter 5 weist einen in y-Richtung aufweitenden ersten Lichtwellenleiter 510 auf, der das Falthologramm 51 aufweist, einen in x-Richtung aufweitenden zweiten Lichtwellenleiter 520, der das Auskoppelhologramm 52 aufweist, und einen dritten Lichtwellenleiter 530, der das Einkoppelhologramm 53 aufweist.

Fig.12 zeigt in räumlicher Darstellung ein Head-Up-Display mit drei Lichtwellenleitern 5R, 5G, 5B, die übereinanderliegend angeordnet sind, und für je eine Elementarfarbe Rot, Grün und Blau stehen. Sie bilden gemeinsam den Lichtwellenleiter 5. Die in den Lichtwellenleitern 5 vorhandenen Hologramme 51,52, 53 sind wellenlängenabhängig, sodaß jeweils ein Lichtwellenleiter 5R, 5G, 5B für eine der Elementarfarben verwendet wird. Oberhalb des Lichtwellenleiters 5 ist ein Bildgenerator 1 und eine Optikeinheit 2 dargestellt. Beide zusammen werden oft auch als bildgebende Einheit oder PGU 100 bezeichnet. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, daß die gesamte dargestellte Einheit eine im Vergleich zu ihrer lichtabstrahlenden Fläche geringe Gesamtbauhöhe aufweist.

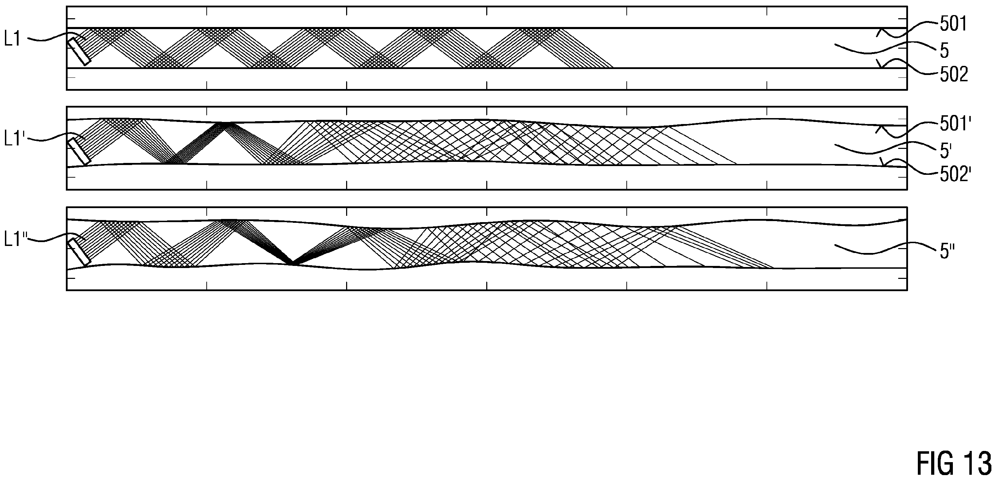

Fig 13 zeigt drei Lichtwellenleiter 5 im Längsschnitt. Der obere Lichtwellenleiter 5 weist eine ideal ebene obere Begrenzungsflächen 501 auf und eine ideal ebene untere Begrenzungsfläche 502, welche beide parallel zueinander angeordnet sind. Man erkennt, daß ein paralleles Lichtbündel L1, welches sich von links nach rechts im Lichtwellenleiter 5 ausbreitet, aufgrund der Parallelität und Ebenheit der oberen und unteren Begrenzungsflächen 501,502 im Querschnitt unverändert und parallel verbleibt. Der mittlere Lichtwellenleiter 5' weist obere und untere Begrenzungsflächen 501',502' auf, die nicht vollkommen eben und auch nicht zumindest abschnittsweise parallel zueinander sind. Der Lichtwellenleiter 5' hat somit eine in Lichtausbreitungsrichtung variierende Dicke. Man erkennt, daß das Lichtbündel L1' schon nach wenigen Reflexionen nicht mehr parallel ist und auch keinen homogenen Querschnitt aufweist. Der untere Lichtwellenleiter 5" hat obere und untere Begrenzungsflächen 501",502", die noch stärker von der Idealform abweichen als die oberen beiden. Das Lichtbündel L1" weicht somit ebenfalls noch stärker von der Idealform ab.

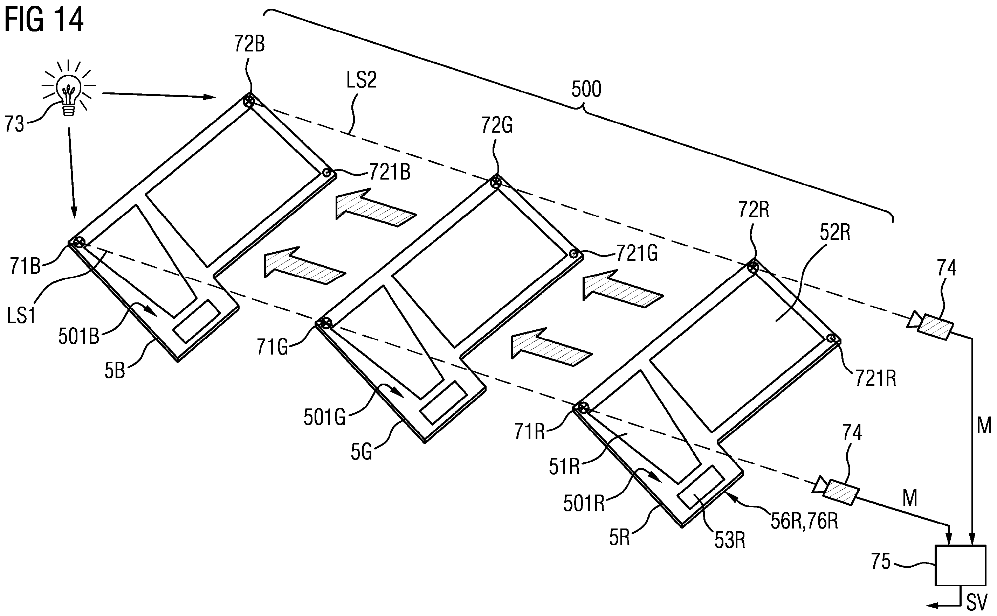

Fig. 14 zeigt einen erfindungsgemäßen Stapel 500 von Lichtwellenleitern 5, 5R, 5G, 5B für ein Head-Up-Display und dessen Herstellung. Bei diesen befinden sich die Einkoppelhologramme 53R, 53G, 53B, die Falthologramme 51R, 51G, 51B und die Auskoppelhologramme 52R, 52G, 52B jeweils an der oberen Begrenzungsfläche 501R, 501G, 501B. Dort befinden sich auch Markierungen 71R,71G,71B und 72R,72G,72B, die hier in den Ecken angeordnet sind, welche sich an der längsten geraden Kante des Lichtwellenleiters 5R, 5G, 5B befinden. Ganz links in der Abbildung erkennt man eine Lichtquelle 73, die hier schematisch als Glühbirne dargestellt ist. Erfindungsgemäß handelt es sich um einen Laser, der Lichtstrahlen LS1, LS2 aussendet, die die Markierungen 71R,71G,71B bzw. 72R,72G,72B passieren, und von Lichtdetektoren 74 detektiert werden. Dabei kann es sich um einfache Lichtdetektorzellen handeln, vorzugsweise sind aber flächige Detektoranordnungen mit mehreren Zeilen und Spalten von Lichtdetektoren zum Erkennen von Mustern vorgesehen.

Bei einem Stapel 500 von Lichtwellenleitern 5,5R,5G, bzw. 5B weist jeder der Lichtwellenleiter 5R,5G, bzw. 5B zumindest ein Hologramm 51R,52R,53R , 51G,52G,53G , bzw. 51B,52B,53B auf und jeder der Lichtwellenleiter 5R,5G, bzw. 5B weist zumindest eine Markierung 71R,72R,721R,71G,72G,721G , bzw. 71B,72B,721B auf. Zueinandergehörige Markierungen 71R,71G,71B, 72R,72G,72B, bzw. 721R,721G,721B der einzelnen Lichtwellenleiter 5R,5G, bzw. 5B sind nach erfindungsgemäßer Herstellung zueinander ausgerichtet angeordnet.

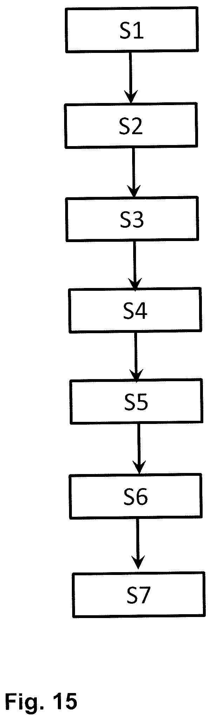

Fig. 15 zeigt ein Ablaufdiagramm eines erfindungsgemäßen Verfahrens. Die ersten Hologramme 51R, 52R und 53R eines ersten Lichtwellenleiters 5R sowie dessen zwei Markierungen 71R,72R werden in einem ersten Schritt S1 geschrieben. Dies erfolgt vorzugsweise durch Belichtung eines flüssigen Materials 76R, welches im ausgehärteten Zustand die Hologrammschicht 56R bildet. In einem zweiten Schritt S2 wird entsprechend der zweite Lichtwellenleiter 5G beschrieben, in einem dritten Schritt S3 der dritte Lichtwellenleiter 5B. In einem vierten Schritt S4 werden die Lichtwellenleiter 5R, 5G, 5B grob zueinander positioniert. In einem weiteren Schritt S5 werden die Markierungen 71R,71G,71B, 72R,72G,72B mittels der Lichtstrahlen LS1, LS2 beleuchtet. In einem weiteren Schritt S6 wird das nach dem Passieren der Markierungen auftretende Muster M im jeweiligen Lichtdetektor 74 detektiert und einer Steuereinheit 75 zugeführt. Diese gibt ein Signal SV an einer hier nicht dargestellte Positioniereinrichtung ab, die in einem weiteren Schritt S7 die Position der Lichtwellenleiter 5R,5G,5B zueinander feinpositioniert bis das detektierte Muster M mit einem vorgegebenen Muster übereinstimmt. Zusätzlich oder alternativ wird eine Markierung 721R, 721G, 721B mittels eines vom Material 76 verschiedenen Materials 761, hier schwarze Farbe, aufgebracht. Die zugehörige Lichtquelle, Detektor und Lichtstrahl sind hier der Übersichtlichkeit halber nicht dargestellt. Die Markierungen 721R,721G,721B sind hier übereinander angeordnet dargestellt. Eine Kombination aus einer oder zwei Markierungen 71,72 des Materials 76 und zwei oder einer Markierung 721 des davon verschiedenen Materials 761 ist ebenfalls sinnvoll, hier aber nicht dargestellt.

Mit anderen Worten betrifft die Erfindung die korrekte Ausrichtung der Auskoppelhologramms 52. Beim Falthologramm 51 und mehr noch beim Einkoppelhologramm 53 ist eine gute Ausrichtung zwar wünschenswert, nicht aber unbedingt erforderlich. Ein Vollfarben-Lichtwellenleiter-Head-Up-Display, auch als Full-Color-Waveguide-Head-up-Display bezeichnet, besteht aus drei übereinander liegenden monochromen Lichtwellenleitern 5R,5G,5B für die Farben Rot, Grün und Blau. Um die optischen Kompensationsmöglichkeiten in vollem Umfang nutzen zu können, ist es erforderlich, die drei einzelnen Lichtwellenleitern 5R,5G,5B exakt zueinander zu positionieren. Dies wird beispielsweise durch mechanische Anschläge realisiert. Eine geeignete Meßtechnik für die Ausrichtung ist derzeit noch nicht vorhanden. Ein Problem ist, daß wenn die drei übereinander liegenden Lichtwellenleiter 5R,5G,5B nicht exakt zueinander ausgerichtet werden, vorhandene optische Kompensationsmöglichkeiten nicht genutzt werden können. Mit den bisher erreichbaren Genauigkeiten kommt es häufig zu Verzerrungen oder Farbverschiebungen. Erfindungsgemäß wird ein Ausrichtkonzept für die einzelnen, übereinander angeordneten Lichtwellenleiter 5R,5G,5B vorgeschlagen.

Um eine möglichst exakte Ausrichtung der einzelnen monochromen Lichtwellenleiter 5R,5G,5B zueinander zu gewährleisten, werden beim Belichtungsprozeß zur Erzeugung der Gitterstrukturen, der Hologramme 51,52 und 53, Markierungen 71,72 mit eingebracht, die ihrerseits sehr exakt zu den in den Lichtwellenleitern 5R,5G,5B vorhandenen Hologrammen 51,52,53 stehen und die so positioniert sind, daß sie im korrekt ausgerichteten Zustand genau übereinander liegen. Während des Ausrichtprozesses werden die Lichtwellenleiter 5R,5G,5B von unten durchleuchtet und die Markierungen mittels des Lichtdetektors 74, beispielsweise einer geeigneten Kamera, erfaßt. Befinden sich die Lichtwellenleiter 5R,5G,5B in einer korrekten Position, werden sie in dieser fixiert.

Durch das Einbringen der Markierungen 71,72 während und gemeinsam mit der Erzeugung der Gitterstrukturen, der Hologramme 51,52,53, in den einzelnen Lichtwellenleitern 5R,5G,5B, werden die Markierungen 71,72 sehr einfach und hochpräzise zum jeweiligen Hologramm 51,52,53 positioniert. Der anschließende Ausrichtprozeß der verschiedenen Lichtwellenleiter 5R,5G,5B zueinander, wird mittels einer Kameraerkennung ebenfalls sehr einfach und präzise durchgeführt. Durch die sehr präzise Ausrichtung der drei einzelnen Lichtwellenleiter 5R,5G,5B kann die volle optische Performance im Sinne von optischen Kompensationsmöglichkeiten zum Ausgleich unterschiedlicher Krümmungen von Windschutzscheiben 31 genutzt werden.

Weitere Details sind den Ansprüchen oder der Beschreibungseinleitung zu entnehmen. Es versteht sich, die angegebenen Maßnahmen auch in Abwandlung oder in anderer Kombination als den hier beschriebenen erfindungsgemäß Verwendung finden können.

### Bezugszeichenliste

- 1: Bildgenerator
- 100: PGU (Bildgebende Einheit)
- 10: Bildebene
- 101: Bereich (der Bildebene)
- 11: Anzeigeelement
- 12: Bildgeber
- 121: Strahlteiler
- 122: Spiegel
- 123: Spiegelebene
- 13,131: Diffusor
- 14, 14R, 14G, 14B: Lichtquelle

- 2: Optikeinheit
- 20: Spiegel
- 21: Faltspiegel
- 22: gekrümmter Spiegel
- 221: Lagerung
- 23: transparente Abdeckung
- 24: optische Folie
- 25: Blendschutz

- 3: Spiegeleinheit
- 31: Windschutzscheibe

- 4: Steuereinheit

- 5: Lichtwellenleiter
- 500: Stapel (von Lichtwellenleitern)
- 501: obere Begrenzungsfläche
- 502: untere Begrenzungsfläche
- 503: linke Begrenzungsfläche
- 504: rechte Begrenzungsfläche
- 505: vordere Begrenzungsfläche
- 506: hintere Begrenzungsfläche
- 51: Falthologramm
- 510: erster Lichtwellenleiter (in y-Richtung aufweitend)
- 52: Auskoppelhologramm
- 520: zweiter Lichtwellenleiter (in x-Richtung aufweitend)
- 522: Spiegelebene
- 523: Spiegelebene
- 53: Einkoppelhologramm
- 530: dritter Lichtwellenleiter (einkoppelnd)
- 56: Hologrammschicht

- 61: Auge
- 62: Eyebox
- 63: Betrachtungsebene
- 64: Störlichtquelle

- 71,71R,71G,71B: Markierung
- 72,72R,72G,72B: Markierung
- 721,721R,721G,721B: Markierung
- 73: Lichtquelle
- 74: Lichtdetektor
- 75: Steuereinheit
- 76: Material, für Hologramm
- 761: Material, nicht für Hologramm

- A: Apertur
- DS1...DS5: diffus gestreute Strahlen
- L1 ... L4: Licht
- LS1,LS2: Lichtstrahlen
- M: Muster
- P1 ... P4: Punkt (auf der Bildebene)
- S1-S7: Verfahrensschritte
- SB1,SB2: Strahlenbündel
- SL: Sonnenlicht
- SV: Signal, Positionsveränderung
- VB: virtuelles Bild

## Patentansprüche

1. Verfahren zum exakten Ausrichten zumindest zweier in Lichtwellenleitern (5,5R,5G,5B) angeordneter Hologramme (52,52R,52G,52B, 53,53R,53G,53B) zueinander, mit
- Schreiben (S1) eines ersten Hologramms (51R,52R,53R) und einer ersten Markierung (71R,72R,721R) in einen ersten Lichtwellenleiter (5R),
- Schreiben (S2) eines zweiten Hologramms (51G,52G,53G) und einer zweiten Markierung (71G,72G,721G) in einen zweiten Lichtwellenleiter (5G),
- Positionieren (S4) des ersten Lichtwellenleiters (5R) und des zweiten Lichtwellenleiters (5G) zueinander,
- Beleuchten (S5) der ersten Markierung (71R,72R,721R) und der zweiten Markierung (71G,72G,721G) mit einem Lichtstrahl (LS1,LS2), der nacheinander zueinander gehörige Markierungen (71R,72R,721R,71G,72G,721G) des ersten Lichtwellenleiters (5R) und des zweiten Lichtwellenleiters (5G) passiert und jeweils von den zueinander gehörigen Markierungen (71R,72R,721R, 71G,72G,721G) beeinflusst wird, wobei die Markierungen (71R,71G,72R,72G,721R,721G) der einzelnen Lichtwellenleiter (5R,5G) Gitterstrukturen oder Hologramme sind, die das beim Beleuchten (S5) verwendete Licht (LS1,LS2) beeinflussen und so aufeinander abgestimmt sind, daß eine korrekte Ausrichtung detektierbar ist, und wobei die Markierungen (71R,71G,72R,72G,721R,721G) eine Linsenfunktion aufweisen, deren zugehörige Brennweiten so gewählt sind, daß beim Beleuchten (S5) ein korrektes Muster nur dann auftritt, wenn auch der Abstand der einzelnen Lichtwellenleiter (5R,5G) zueinander einen vorgegebenen Wert annimmt,
- Detektieren (S6) eines beim Beleuchten (S5) mit dem Lichtstrahl (LS1,LS2) nach dem Passieren der ersten Markierung (71R,72R,721R) und der zweiten Markierung (71G,72G,721G) auftretenden Musters (M), und
- Verändern (S7) der Position eines der Lichtwellenleiter (5R,5G,5B) solange, bis das detektierte Muster (M) mit einem vorgegebenen Muster übereinstimmt.

2. Verfahren gemäß Anspruch 1, mit
- Schreiben (S1,S2) zumindest einer der Markierungen (71,72) in dasselbe Material (76), in das das zugehörige Hologramm (5) geschrieben wird.

3. Verfahren gemäß Anspruch 1, mit
- Schreiben (S1,S2) zumindest einer der Markierungen (721) in ein anderes Material (761) als demjenigen, in das das zugehörige Hologramm (5) geschrieben wird.

4. Verfahren gemäß einem der Ansprüche 1-3, wobei die Markierungen (71R,71G, 72R,72G, 721R,721G) der einzelnen Lichtwellenleiter (5,5R,5G,5B) bei korrekter Positionierung exakt übereinander liegen und beim Beleuchten (S5) ein detektierbares Muster (M) ergeben.

5. Verfahren gemäß einem der Ansprüche 1-3, wobei die Markierungen (71R,71G, 72R,72G, 721R,721G) der einzelnen Lichtwellenleiter (5,5R,5G,5B) bei korrekter Positionierung nebeneinander liegen und beim Beleuchten (S5) ein detektierbares Muster (M) ergeben.

6. Verfahren gemäß Anspruch 1 oder 2, wobei ein zentraler Bereich der Markierung Licht (LS1,LS2) passieren läßt, während ein außerhalb des zentralen Bereichs befindlicher äußerer Bereich Licht (LS1,LS2) stark nach außen ablenkt.

7. Stapel (500) von Lichtwellenleitern (5R,5G) hergestellt mittels einem Verfahren gemäß einem der vorhergehenden Ansprüche.

8. Head-Up-Display, aufweisend einen Stapel (500) von Lichtwellenleitern (5R,5G) gemäß Anspruch 7.

## Claims

1. Method for exactly aligning at least two holograms (52,52R,52G,52B, 53,53R,53G,53B) arranged in optical waveguides (5,5R,5G,5B) with respect to one another, with
- writing (S1) a first hologram (51R,52R,53R) and a first mark (71R,72R,721R) in a first optical waveguide (5R),
- writing (S2) a second hologram (51G,52G,53G) and a second mark (71G,72G,721G) in a second optical waveguide (5G),
- positioning (S4) the first optical waveguide (5R) and the second optical waveguide (5G) with respect to one another,
- illuminating (S5) the first mark (71R,72R,721R) and the second mark (71G,72G,721G) using a light beam (LS1,LS2) that successively passes mutually associated marks (71R,72R,721R,71G,72G,721G) of the first optical waveguide (5R) and of the second optical waveguide (5G) and that is in each case influenced by the mutually associated marks (71R,72R,721R**,** 71G,72G,721G), wherein the marks (71R,71G,72R,72G,721R,721G) of the individual optical waveguides (5R,5G) are grating structures or holograms that influence the light (LS1,LS2) used during the illumination (S5) and are adapted to one another in such a way that a correct alignment is detectable, and wherein the marks (71R,71G,72R,72G,721R,721G) have a lens function whose associated focal lengths are selected in such a way that a correct pattern only occurs during the illumination (S5) when the distance between the individual optical waveguides (5R,5G) also takes a specified value,
- detecting (S6) a pattern (M) occurring during the illumination (S5) with the light beam (LS1,LS2) after passing the first mark (71R,72R,721R) and the second mark (71G,72G,721G), and
- changing (S7) the position of one of the optical waveguides (5R,5G,5B) until the detected pattern (M) matches a specified pattern.

2. Method according to Claim 1, with
- writing (S1,S2) at least one of the marks (71,72) in the same material (76) in which the associated hologram (5) is written.

3. Method according to Claim 1, with
- writing (S1,S2) at least one of the marks (721) in a material (761) different from that in which the associated hologram (5) is written.

4. Method according to any of Claims 1-3, wherein the marks (71R,71G, 72R,72G, 721R,721G) of the individual optical waveguides (5,5R,5G,5B) are exactly on top of each other when correctly positioned and result in a detectable pattern (M) when illuminated (S5).

5. Method according to any of Claims 1-3, wherein the marks (71R,71G, 72R,72G, 721R,721G) of the individual optical waveguides (5,5R,5G,5B) lie next to one another when correctly positioned and result in a detectable pattern (M) when illuminated (S5).

6. Method according to Claim 1 or 2, wherein a central region of the mark allows light (LS1,LS2) to pass, while an outer region located outside the central region strongly deflects light (LS1,LS2) to the outside.

7. Stack (500) of optical waveguides (5R,5G) produced by means of a method according to any of the preceding claims.

8. Head-up display, having a stack (500) of optical waveguides (5R,5G) according to Claim 7.

## Revendications

1. Procédé pour aligner avec précision au moins deux hologrammes (52, 52R, 52G, 52B, 53, 53R, 53G, 53B) agencés dans des guides d'ondes de lumière (5, 5R, 5G, 5B) les uns par rapport aux autres, comprenant
- l'écriture (S1) d'un premier hologramme (51R, 52R, 53R) et d'un premier repère (71R, 72R, 721R) dans un premier guide d'ondes de lumière (5R),
- l'écriture (S2) d'un deuxième hologramme (51G, 52G, 53G) et d'un deuxième repère (71G, 72G, 721G) dans un deuxième guide d'ondes de lumière (5G),
- le positionnement (S4) du premier guide d'ondes de lumière (5R) et du deuxième guide d'ondes de lumière (5G) l'un par rapport à l'autre,
- l'éclairage (S5) du premier repère (71R, 72R, 721R) et du deuxième repère (71G, 72G, 721G) avec un faisceau lumineux (LS1, LS2), qui traverse successivement les repères correspondants (71R, 72R, 721R**,** 71G, 72G, 721G) du premier guide d'ondes de lumière (5R) et du deuxième guide d'ondes de lumière (5G) et est détecté par les repères correspondants (71R, 72R, 721R, 71G, 72G, 721G), les repères (71R, 71G, 72R, 72G, 721R, 721G) des différents guides d'ondes de lumière (5R, 5G) étant des structures en réseau ou des hologrammes qui influencent la lumière (LS1, LS2) utilisée lors de l'éclairage (S5) et sont ainsi coordonnés entre eux de manière à permettre la détection d'un alignement correct, et les repères (71R, 71G, 72R, 72G, 721R, 721G) comprenant une fonction de lentille dont les distances focales associées sont choisies de telle sorte que, lors de l'éclairage (S5), un motif correct n'apparaît que si la distance entre les différents guides d'ondes de lumière (5R, 5G) prend également une valeur prédéfinie,
- la détection (S6) d'un motif (M) apparaissant lors de l'éclairage (S5) avec le faisceau lumineux (LS1, LS2) après le passage du premier repère (71R, 72R, 721R) et du deuxième repère (71G, 72G, 721G), et
- la modification (S7) de la position de l'un des guides d'ondes de lumière (5R, 5G, 5B) jusqu'à ce que le motif détecté (M) corresponde à un motif prédéfini.

2. Procédé selon la revendication 1, comprenant
- l'écriture (S1, S2) d'au moins l'un des repères (71, 72) dans le même matériau (76) que celui dans lequel est écrit l'hologramme associé (5).

3. Procédé selon la revendication 1, comprenant
- l'écriture (S1, S2) d'au moins l'un des repères (721) dans un matériau (761) différent de celui dans lequel est écrit l'hologramme associé (5).

4. Procédé selon l'une des revendications 1 à 3, dans lequel les repères (71R, 71G, 72R, 72G, 721R, 721G) des différents guides d'ondes de lumière (5, 5R, 5G, 5B) sont exactement superposés lorsqu'ils sont correctement positionnés et forment un motif détectable (M) lors de l'éclairage (S5).

5. Procédé selon l'une des revendications 1 à 3, dans lequel les repères (71R, 71G, 72R, 72G, 721R, 721G) des différents guides d'ondes de lumière (5, 5R, 5G, 5B) sont juxtaposés lorsqu'ils sont correctement positionnés et forment un motif détectable (M) lors de l'éclairage (S5).

6. Procédé selon la revendication 1 ou la revendication 2, dans lequel une zone centrale du repère laisse passer la lumière (LS1, LS2) tandis qu'une zone extérieure située à l'extérieur de la zone centrale dévie fortement la lumière (LS1, LS2) vers l'extérieur.

7. Empilement (500) de guides d'ondes de lumière (5R, 5G) fabriqué selon un procédé selon l'une des revendications précédentes.

8. Affichage tête haute comprenant un empilement (500) de guides d'ondes de lumière (5R, 5G) selon la revendication 7.
